# EUROPEAN PATENT APPLICATION

(11) **EP 0 896 200 A2**
(43) Date of publication of application: **10.02.1999**
(21) Application number: 98305648.2
(22) Date of filing: 15.07.1998
(51) Int. Cl.: G01B 3/10

(54) **Concave blade manual return measuring tape**

(30) Priority: 05.08.1997 US 906034
(71) Applicant: Cooper Industries, Inc., Houston, Texas 77002 (US)
(72) Inventor: Blackman, William C., Raleigh, North Carolina 27612 (US); Gilliam, Edgar T., Franklinton, North Carolina 27525 (US); Bobay, Michael J., Holly Springs, North Carolina 27540 (US); Moody, John B., Raleigh, North Carolina 27613 (US)
(74) Representative: Jackson, Peter Arthur

(57) **Abstract**

A manual return concave blade tape measure includes a three part case in which a winding reel for the tape blade is disposed. The winding reel includes a core on which the tape blade is wound, and a flange disposed inside the case. A boss having a winding crank extends through a hole in a side of the case. A friction ring is positioned between the flange and the case wall to provide friction to resist unwanted unwinding of the tape blade. A lip in a mouth for the blade engages an end hook to secure the end hook temporarily in the case until released by lifting upward, which allows the tape blade to be pulled from the case. The crank is angled so that when folded into a storage position, an edge of the crank projects upward for an easy finger hold to unfolding the crank

## Description

Concave blade tape measures are commonly used by those in the construction and contracting trades because the stiffness of the concave curved blade allows one person to manipulate the blade for a variety of layout and measuring tasks. Concave tape blades are commonly found in power return tape measures having spring motors to rewind the tape blade. A difficulty with concave tape blades is that winding a concave blade in a coil produces spring forces that distort the coil. As a result, power return tape measures are generally limited to about 30 to 35 feet of tape length. In the construction trade, it is frequently necessary to lay out wall stud patterns of fifty feet, which renders a measuring tape shorter than 50 feet long inconvenient.

The invention is directed to concave blade tape measures that can be made in lengths greater than 30 feet. More particularly, the present invention is directed to a concave blade tape measure having a manual return mechanism.

A tape measure in accordance with the invention includes a case or housing made of three parts, a right shell, a center tubular spacing member, and a left shell, that are fastened together to define an interior space. A mouth for the tape blade is formed in the spacing member near the bottom of the case.

According to the invention, a tape blade is wound on a winding reel supported for rotation in the case. The reel includes a core to support the wound tape, and a flange member adjacent the core and supporting a side of tape blade to facilitate winding into a core.

The reel also includes a flange and a boss projecting from the flange. The boss is positioned to extend through a hole in the right side shell with the flange disposed on an inner face of the right shell. A crank for turning the winding reel is attached to the boss.

A friction ring is disposed between the flange and the inner face of the right shell to provide friction to resist rotation of the winding reel caused by spring energy stored in the wound tape blade which urges the blade to unwind.

The opening in the tubular spacer for the tape blade includes a lip that engages a portion of an end hook on the tape to releasably secure the end hook to the case, which also prevents the tape blade from unwinding of the tape blade.

The crank is pivotably mounted on the boss, and has a closed or folded position and an extended or unfolded position. In the closed position, a leg of the crank projects away from the boss which provides an access point for pressing the crank to move it to the unfolded position.

The invention will be better understood by reference to the following detailed description in conjunction with the appended drawings, in which:
Figure 1 is a perspective view of a measuring tape in accordance with the invention;
Figure 2 is a right side view of the measuring tape of Figure 1 with the right side shell removed to illustrate the interior;
Figure 3 is a right side view of the tape measure of Figure 1;
Figure 4 is a side view of a winding reel for the measuring tape blade;
Figure 5 is a view of an interior of a left side shell of the measuring tape of Figure 1;
Figure 6 is a front view of a friction ring;
Figure 7 is a side view of the friction ring of Figure 6;
Figure 8 is side view of a tubular spacing member; and
Figure 9 is a front view of the spacing member of Figure 8.

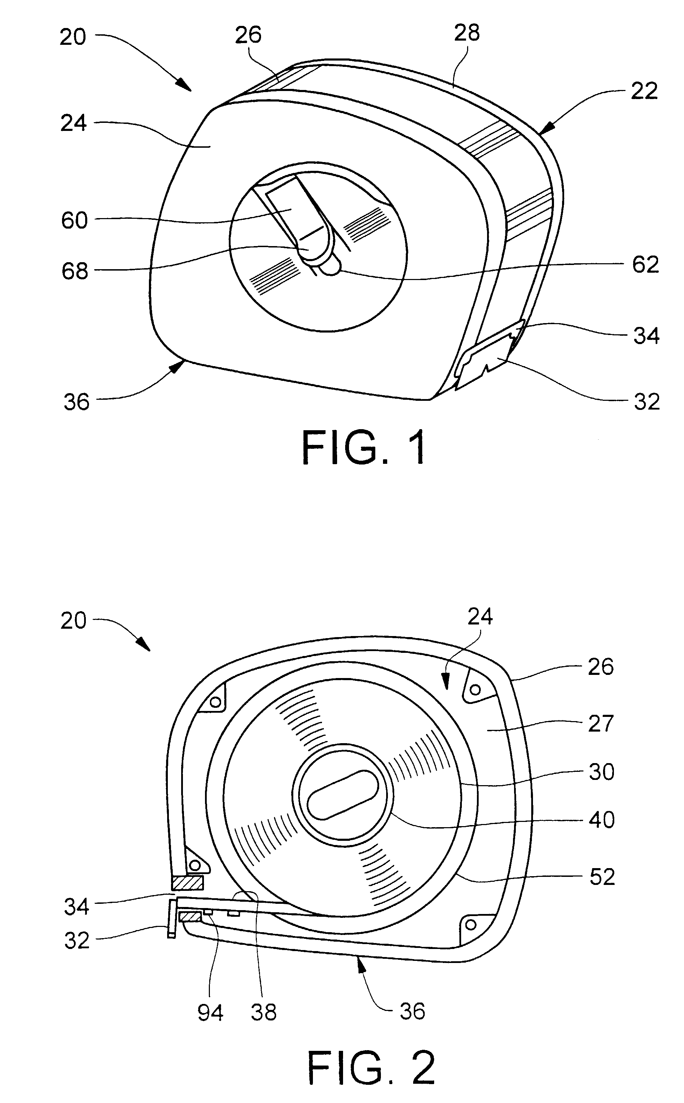

A manual return tape measure 20 in accordance with the invention is illustrated in perspective view in Figure 1. The tape measure 20 includes a case 22 having a right side shell 24, a tubular center member 26 and a left side shell 28 fastened together to define a closed interior for housing a measuring tape wound on a reel. The terms "right" and "left" are used for convenience in the description, and indicate a reference direction for typical use of the measuring tape in which the right side of the case will face the right hand of the user.

Figure 2 shows the tape measure 20 with the left side shell 28 removed. A concave blade measuring tape 30 is wound on a core 40 inside the case 20 with an end hook 32 extending from an opening 34 near the bottom 36 of the case. By concave blade is meant a strip of material that is curved along a long axis to have the familiar trough shape, being concave on one side and convex on the opposite side. The blade 30 is positioned so that the concave side 38 faces upward, that is, away from the bottom 36, when the blade extends from the case.

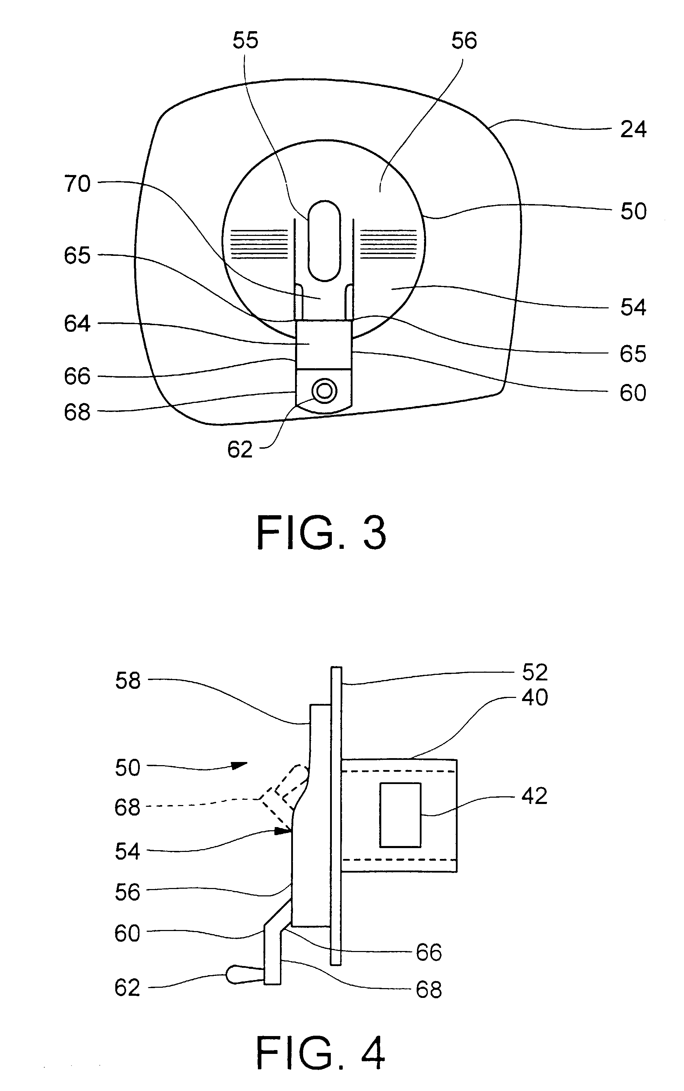

The tape 30 is wound on a winding reel 50, which is illustrated in front view in Figure 3 with the right side shell 24, and in Figure 4 in side view removed from the case 20. The winding reel 50 includes the core 40 and a flange 52 integrally attached to the core. The flange 52 provides a guide during winding to help wind and maintain the tape blade in the cylindrical core. The core 40 includes a hole 42 in which the end of the tape blade 30 is inserted and secured. A raised boss 54 projects from the flange from a side opposite the core 40. The boss 54 includes a stepped front face, having a first portion 56 that projects farther from the flange 52 than a second portion 58. A well 55 is formed in the boss 54 in the first portion 56.

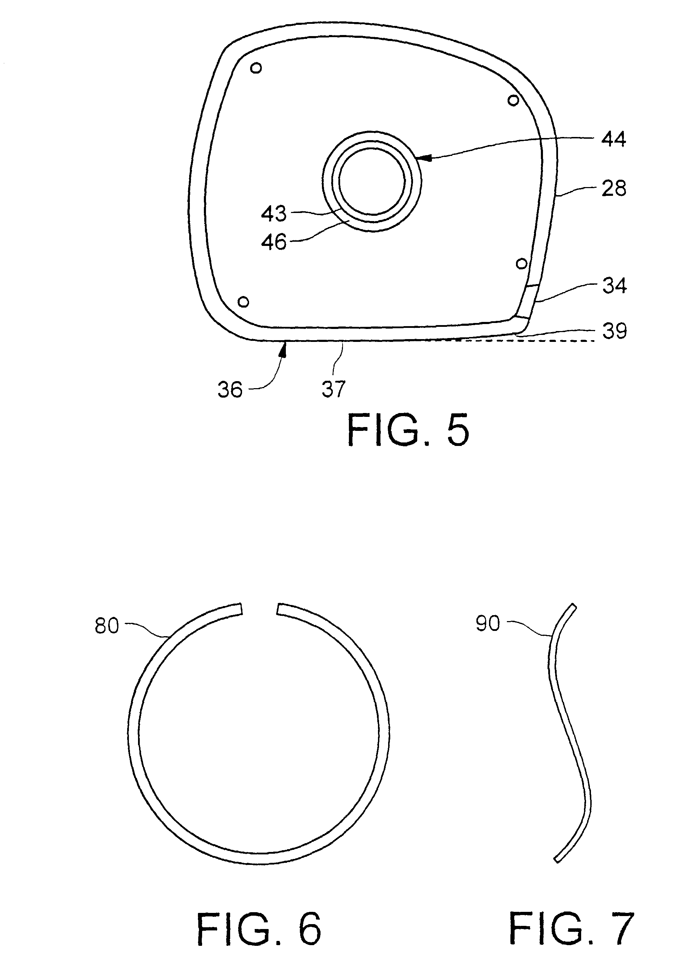

The winding reel 50 is disposed in the case 20 with the boss 54 projecting through a hole 25 in the right side shell 24 (Figure 3) and the flange 52 positioned on an inside face of the right side shell 24 (Figure 2). The core 40 abuts a bearing 44 mounted or formed on the left side shell, illustrated in Figure 5. The bearing 44 includes a flat disk portion 46 against which the end face of the core 40 rests and a raised circular collar 48 that is received in the core to support the core during rotation.

A crank 60 is mounted in the well 55 in the first portion 54. The crank 60 is pivotable between a folded position (shown in Figure 1) where it is received in the well 55, and an extended position for turning the winding reel 50, shown in Figures 3 and 4, in which the crank is disposed outward and away from the boss 54. The crank 60 includes a knob 62 for manipulation of the crank. A crank arm has a dog-leg shape, with a first leg 64 attached to the boss 54 by pins 65. A second leg 68 extends at an angle from the first leg 66. A leaf spring 70 formed in the well 55 and cooperates with flat surfaces of the first leg 64 for releasably holding the crank arm in any of three different positions, including the folded and extended positions, and an upright position where the crank is substantially perpendicular to the boss 54. When the crank 60 is in the folded position, the first leg is parallel to the boss 54, as shown in Figure 1 and in ghost in Figure 4, and the second leg 68 is oblique to the boss. In the extended position, shown in Figure 4, the second leg 68 is parallel to the boss 54 and the first leg extends obliquely. This extended position advantageously spaces the crank knob 62 away from the case 20 and the boss 54 to facilitate manually turning the crank to rewind the measuring tape blade.

As seen in Figure 1 and Figure 4 in ghost, the second end 68 of the crank in the folded position is positioned at the junction between the first 56 and second 58 portions of the boss. The second end 68 projects above the junction and provides an easily accessible point on which pressure (from a thumb or finger) can be applied to pivot the crank from the folded position to the extended position. The jutting out position of the second end 68 is advantageous when the user is wearing work gloves, which is typical in the construction trade.

As can be seen in Figure 2, the tape 30 wound on the core 40 is flattened, which transforms the concave curvature into elastic energy that tends to cause the coil of tape to distort. The degree of distortion is proportional to the length of measuring tape (and hence the amount of stored energy) and the size of the core on which the blade is wound. In power return tape measures, which have large inner cores to accommodate the return spring, the distortion in tapes longer than about 30 to 35 feet can render the power return mechanism inoperable.

Another characteristic of wound, metal tapes is that winding the tape around the core 40 axis stores up spring energy that tends to cause the tape to unwind. If unconstrained, the wound tape 30 in the case 20 would unwind through the opening 34.

The tape measure 20 according to the invention includes two features to prevent unwanted unwinding of the coiled tape 30. Figure 6 and Figure 7 illustrate two views of a friction ring 80 that is disposed between the flange 52 of the winding reel 50 and the inner face 27 of the right side shell 24. The friction ring 80 is formed of spring steel in a ring shape having an undulating profile, illustrated in Figure 7. The ring 80 is compressed between the flange 52 and the right side shell 24, and provides sufficient friction therebetween so that rotation of the winding reel 50 from spring energy of the wound tape blade 30 is avoided. The tape blade 30 will not unwind from the case 20 without an externally applied force, and will remain at any position to which the blade is extended. Other friction rings, for example, a cork ring or a ring having a prepared, roughened surface, could be used as alternatives.

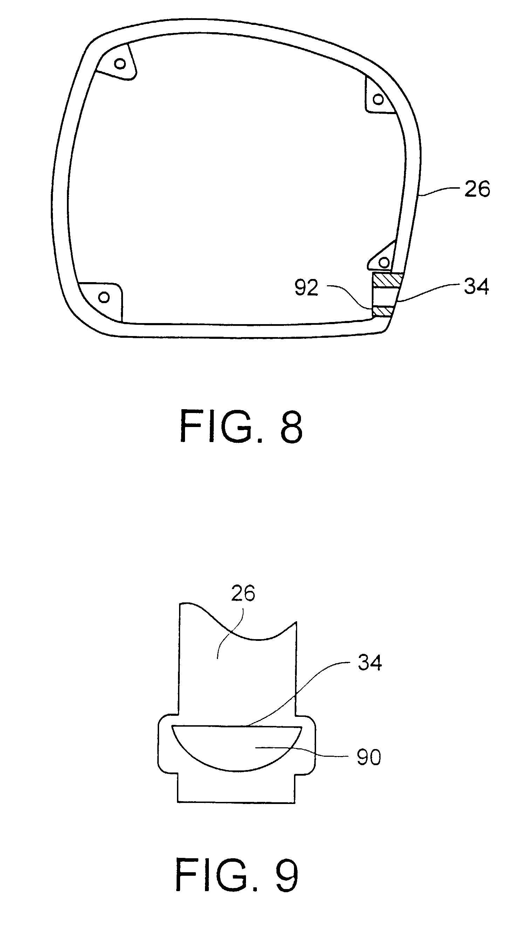

Figure 8 shows a side view of the center tubular member 26 removed from the case 20. The tubular member 26 spaces the right shell 24 and the left shell 28 a distance appropriate for the width of the tape blade. In addition, the tubular member 26 includes the opening 34 through which the tape blade extends. Figure 9 is a front view of the tubular member 26 showing the opening 34. The opening 34 includes a hole 90 shaped with a curvature to approximate the curvature of the convex side of the blade. The opening 34 also includes a lip or edge 92 on an inner side of the opening that engages a portion of the end hook 32 to releasably secure the end hook to the case 20. As seen in Figure 2, the end hook 32 is fastened to the tape blade 30 with rivets 94 that extend through the blade and end hook. When the tape blade 30 is wound fully on the core 40, the rivets 94 are disposed inside the case 20, and the spring energy of the wound tape blade urges the tape against the opening and the lip 92. The rivets 94 thus catch on the lip 92, preventing the tape blade 30 from moving through the opening 34 until the rivets are lifted above the lip.

The center tubular member 26 is made of a material such as nylon that is resistant to cuts from the long edges of the tape blade running against it while being pulled from the case and rewound into it.

According to another aspect of the invention, the bottom 36 of the case 20 is shaped to rock slightly. As seen in Figure 5, a main part 37 of the bottom 36 is substantially flat, and a front part 39, as indicated by the broken line, is oblique to the main part and directed toward the opening 34. The extended tape blade, because of spring energy in the wound blade and the orientation of the bottom of the coil to the opening, is angled toward the top of the opening 34, away from the bottom 36 of the case 20. The extended tape is thus not parallel with the bottom of the case, which could cause difficulty in making measurements. Changing the orientation of the entire bottom wall 36 would cause the case to rest on the end hook 32 when the tape is fully wound.

According to the invention, when the tape is fully wound in the case, the case will naturally rest on the major part 35. When the tape blade is extended about two feet, the weight of the extended blade causes the case 20 to rock onto the front part 39 of the bottom 36, which in turn causes the blade to tilt downward until the end hook rests on the horizontal surface, thus facilitating measurement.

## Claims

1. A manual return measuring tape, comprising:
a case having opposed first and second shells, the first shell having a hole in a lateral wall;
a winding reel comprising a cylindrical core integrally attached at a first end to a flange, the flange having a boss projecting from a central portion of the flange opposite the core, the winding reel being disposed between the first and second shells with the boss projecting through the hole in the lateral wall of the first shell and a radially outer portion of the flange disposed inside the first shell along the wall, and with a second end of the core abutting the second shell, wherein the winding reel is rotatable relative to the case;
a friction ring disposed between the outer portion of the flange and the wall of the first shell to resist rotation of the flange;
a handle for manually rotating the winding reel pivotally mounted to the boss and pivotable between a folded position and an extended position; and
a concavo-convex measuring tape blade wound on the core and constrained between the flange and the second shell, a free end of the tape blade extending through an opening in the case.

2. The measuring tape as claimed in claim 1, wherein the brake ring is a spring ring having an undulate shape that biases the flange toward the second shell.

3. The measuring tape as claimed in claim 1, further comprising a bearing mounted in the second shell to support the second end of the core for rotation, the bearing having a stud received in the core and a disk portion abutting the second end of the core.

4. The measuring tape as claimed in claim 1, wherein the handle includes a crank having a pivot end attached to the boss, and wherein the boss includes an integrally formed leaf spring acting on the pivot end of the crank, the leaf spring releasably retaining the crank in the folded position, a perpendicular position, and the extended position.

5. The measuring tape as claimed in claim 1, wherein the handle includes a crank shaped with a bend, wherein with the handle in the folded position a free end of the crank extends obliquely away from the boss to provide an accessible edge for manually pivoting the handle to the open position.

6. The measuring tape as claimed in claim 5, wherein the boss is formed with a stepped front face, a first portion of the face being farther from the first shell than a second portion is, wherein the handle in the extended position is spaced from the first shell.

7. The measuring tape as claimed in claim 5, wherein the boss is formed with a stepped front face, a first portion of the face carrying the handle being farther from the first shell than a second portion, the free end of the handle terminating at a junction between the first portion and the second portion.

8. The measuring tape as claimed in claim 1, wherein the handle in the extended position radially extends not more than a peripheral edge of the first shell.

9. The measuring tape as claimed in claim 1, wherein the case further comprises a tubular member fastened between the first and second shells, the tubular member supporting and spacing the shells, and having the opening for the tape blade.

10. The measuring tape as claimed in claim 9, further comprising an end hook attached to a free end of the tape blade with fasteners, and wherein the opening in the tubular member includes a lip formed on a lower side of the opening to engage the fasteners of the end hook to lock the end hook to the case.

11. The measuring tape as claimed in claim 9, wherein at least a portion of the tubular member including the opening is made of a material resistant to cuts from the tape blade.

12. The measuring tape as claimed in claim 1, wherein a bottom surface of the case is curved to allow the case to rock between a resting position and a forward position tilted toward the opening, wherein the case is positionable in the forward position when a predetermined length of tape blade is extended from the case.

13. A manual return measuring tape, comprising:
a case having a tubular portion and first and second shells fastened to opposite lateral sides of the tubular portion, the first shell having a hole in a lateral wall, the tubular portion having a tape blade opening;
a winding reel comprising a cylindrical core integrally attached at a first end to a flange, the flange having a boss projecting from a central portion of the flange opposite the core;
a bearing mounted in the second shell having an upstanding collar and a disk surface, the winding reel being disposed between the first and second shells with the boss projecting through and supported in the hole in the lateral wall of the first shell, a radially outer portion of the flange disposed inside the first shell along the wall, and with a second end of the core abutting the bearing in the second shell, wherein the winding reel is rotatable relative to the case;
a brake ring disposed between the outer portion of the flange and the wall of the first shell to resist rotation of the flange;
a handle for manually rotating the winding reel pivotally mounted to the boss and pivotable between a folded position and an extended position; and
a concavo-convex measuring tape blade wound on the core and constrained between the flange and the second shell, a free end of the tape blade extending through the opening in the case.
